# EUROPEAN PATENT SPECIFICATION

(11) **EP 2 327 588 B1**
(45) Date of publication and mention of the grant of the patent: **24.10.2012**
(21) Application number: 10014856.8
(22) Date of filing: 23.11.2010
(51) Int. Cl.: B60R 13/00

(54) **Decorative member for use as an emblem of motor-vehicle, and method for manufacturing the same**
Zierelement für die Verwendung als Emblem eines Kraftfahrzeuges und Verfahren zur Herstellung desselben
Elément décoratif, en particulier pour l'utilisation comme emblème de véhicule automobile et méthode de production

(30) Priority: 25.11.2009 IT TO20090912
(43) Date of publication of application: 01.06.2011
(73) Proprietor: ZANINI HOLDING S.p.A., 28040 Paruzzaro (Novara) (IT)
(72) Inventor: Zanini, Paolo, 28041 Arona (Novara) (IT); Franzino, Mario, 20127 Milano (IT)
(74) Representative: Cian, Paolo

(56) References cited:
- EP-A1- 1 342 589
- EP-A2- 1 927 480
- JP-A- 9 240 382
- US-A- 5 928 591
- US-B1- 6 701 652

## Description

The present invention refers in general to decorative members, for example usable as emblems in order to represent images, symbols or trademarks, and particularly intended to be applied on a motor vehicle in order to increase its aesthetic value or to allow the manufacturer to be identified.

EP-1 927 480 A2 discloses a decorative member having a transparent body of plastic material provided with a back surface on which a series of cavities have been formed. On this back surface, an image is formed by applying paint layers by tampography, pad-printing, or by a silk-screen or a hot-stamping or a spray-painting process. On these paint layers, a pigmented paint layer as well as a further protective paint layer are applied by spray application processes.

In particular, the invention relates to a decorative member, particularly intended to be used as an emblem for a motor vehicle, comprising a first body of transparent plastic material having a front face and a substantially flat rear face, an image formed by ink-jet printing at a printing zone of the rear face, and a generally flat second body applied to the rear face of the first body.

A member of this type is known from JP-A-2004-338300 and from CA-2 568 736. In particular, JP-A-2004-338300 discloses a DVD (Digital Video Disc) having a first transparent body, for example of polycarbonate, on one face of which an image is formed by ink-jet printing.

On such an image, a white paint layer can be applied on the side opposite to the first body. The first body with the respective image is then connected, at its overall contact surface, to a second body, which is also usually transparent, to which a data support substrate is associated.

However, the member known from the above mentioned documents is not adapted to be exposed to atmospheric agents, and therefore it cannot constitute a decorative member adapted to be applied to the outside of a motor vehicle.

In fact, decorative members for motor-vehicles must be able to resist for a long time to particularly heavy atmospheric conditions, characterized by high humidity, by the presence of corrosive substances, often having a strongly acid or basic base, and to resist to high thermal excursions, usually in the range from -30°C to +90°C. In particular, a decorative member manufactured according to the teaching of the documents mentioned above, would deteriorate in a short time owing to aggression by atmospheric agents, and the image interposed between the two bodies of plastic material, which could easily separate to each other, would be unavoidablly degraded. As a result, a decorative member of this type does not comply with requirements set forth by automotive industry since, if it is used outside of the body of a motor-vehicle, it would endure an unacceptable deterioration.

In order to overcome the drawbacks of the prior art, the subject of the invention is a decorative member having the features mentioned in the appended claims.

By virtue of this idea of solution, the decorative member of the invention has several advantages deriving directly from the fact that its image is made by a ink-jet printing process known per se. In particular, the image can have very fine details with a very wide range of colors, it can be set right by a software without requiring particular costs of investment owing to complex machinery, and it can be modified or replaced in a short time. Moreover, by virtue of the invention, the image of the decorative member is enclosed in a sealed chamber, so as to be fully isolated from the outer environment, so that it cannot endure any attack by atmospheric agents and it remains completely unchanged in the time.

The invention relates also to a method for manufacturing a decorative member, of the type defined in appended claim 7 and in the claims depending on it.

By virtue of this method, it is possible to obtain a decorative member that is highly resistant and durable in the time.

Further characteristics and advantages of the invention will be made clearer by the following detailed description, supplied as a non-limitative example and referred to the appended drawings, in which:
- figure 1 is a schematic front elevational view of a decorative member according to the invention,
- figure 2 is a schematic exploded side elevational view of the main elements of the decorative member in the condition preceding their connection, sectioned along line II-II of figure 1,
- figure 3 is a view similar to figure 2, showing the elements of figure 2 reciprocally connected according to a first modification of the connection,
- figure 4 is a perspective view of the member of figure 3, sectioned along line II-II of figure 1, and
- figure 5 is a view similar to figure 3, showing the members of figure 2 reciprocally connected according to another modification of the connection.

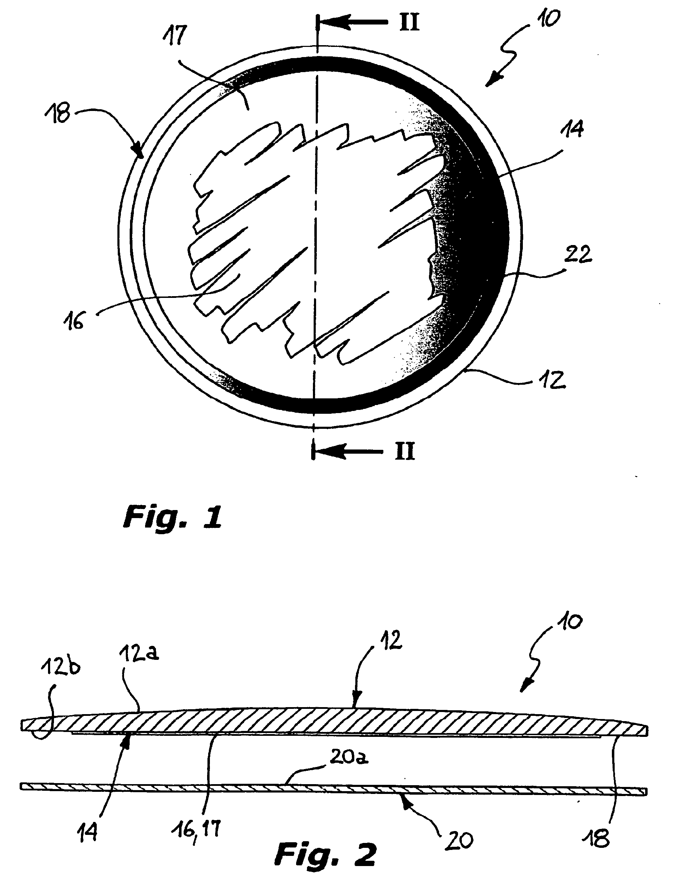

With initial reference to figures 1 to 4, a decorative member according to the invention is indicated 10 in its whole. In spite of the fact the shape of the member 10 shown in the figures is circular, it could, obviously, be anyone.

The emblem 10 comprises a first body 12 of a substantially rigid transparent plastic material, usually made of poly-metil-meth-acrylate (PMMA) or of polycarbonate (PC), typically formed as a result of a moulding process, for example of the injection type.

The body 12 has a front face 12a intended to face the outside, in the use, and therefore an observer, and a rear face 12b opposite to the face 12a.

The front face 12a is smooth and preferably convex, while the rear face 12b is substantially flat, so that the body 12 has the general appearance and the function of a lens. Hovewer, the rear face 12b can be provided with slight hollow prints (not shown) to define a series of ornamental or graphical patterns.

Preferably, the plastic material used for making the body 12 incorporates a UV rays screening agent, in order to carry out a protective action towards aggressive action of solar radiation, for the layers below it. This screening agent may consist of a substance belonging to benzotriazol family. In particular, an effective UV rays screening action can be obtained by adding to the plastic material of the body 12 about 2.5% in weight of a concentrated masterbatch containing 2-(2H-benzotriazol-2-yl)-p-cresol.

Conveniently, the plastic material of the body 12 is prepared, before the moulding step, by subjecting it to a dehumidification process in order to remove any possible trace of humidity from the material.

Preferably, after the moulding step of the body 12, it undergoes again a dehumidification process, in order to remove any possible residual humidity.

Conveniently, the rear face 12b of the body 12 may undergo a deep cleaning process by means of corona electrical discharge, or cold plasma or liquid CO₂ treatment, in order to remove possible dusts, impurities and/or traces of fat.

Thus, an image 16 is formed on the rear face 12b of the body 12 by means of the known ink-jet printing technique. The image 16 is printed at a printing zone 14 the size of which is substantially smaller than the overall extension of the face 12b, in such a manner that a free perimetral edge 18 extends outside of the printing zone 14, which edge encircles all the zone 14.

By virtue of ink-jet printing technique, the image 16 may be also very complex, may have very fine details and can be made by an almost unlimited number of colors. Moreover, it can be modified or replaced in a very short time, which would be practically impossible if other usually known printing techniques should be used, such as conventional painting, tampography, serigraphy or hot printing.

The ink of the image 16 is then dried and polymerized by means of a UV ray polymerization device known per se.

Conveniently, a usually light bottom layer 17, typically white, may be applied on the image 16 by means of ink-jet printing technique, always and only inside the printing zone 14. This bottom layer 17 constitutes a background for the image 16 and, at the same time, a coating having the function of a first protection for the image 16. Also the bottom layer 17 is preferably dried and polymerized by means of a UV ray polymerization device known per se.

The deumidification step performed before printing the image 16 at the printing zone 14, has also the function of promoting adhesion both of the ink of the image 16 and of the possible bottom layer 17, on the rear face 12b.

In order to further promote adhesion of the ink of the image 16 and of the possible bottom layer 17, the surface of the printing zone 14 may be slightly rough. For this purpose, the mould used for printing the body 12 previously undergoes a sandblasting process, at the printing zone 14 only, in such a manner that the surface of the zone 14 of the body 12 is also correspondingly rough.

Moreover, a second body 20 is prepared, the plan shape of which corresponds to that of the body 12. Also the second body 12 is made by moulding, typically by injection moulding, a substantially rigid plastic material, such as poly-metil-meth-acrylate (PMMA), polycarbonate (PC) or ABS. Differently from the material of the body 12, the plastic material of the second 20 is opaque and preferably has a dark color, for example black.

Analogously to what has been described in connection with the plastic material of the body 12, also the material of the body 20 undergoes preferably a dehumidification process before the moulding step, and the body 20, after having been moulded, can be conveniently be treated by a dehumidification process in order to eliminate any trace of humidity.

Conveniently, the front surface 20a of the body 20, which is intended to be applied against the body 12, is subjected to a corona electrical discharge, or cold plasma, or liquid CO₂ cleaning process.

The bodies 12 and 20 are then arranged side by side, in such a manner that the image 16, formed at the printing area 14 of the face 12b, is interposed between them.

When the bodies 12 and 20 are arranged side by side, they undergo a relatively high pressure, typically comprised in the range from about 0.3 to 0.5 N/mm2, in order to promote the following reciprocal connection, and for fully ejecting any air present between the printing zone 14 of the body 12 and the front surface 20a of the body 20.

According to a first modification of the invention, the bodies 12 and 20 are stably connected to each other by means of a peripheral welding, preferably carried out by laser welding, by making a welding seam 22 that extends along the free edge 18, and therefore on the outside of the printing zone 14 and, particularly, on the outside of the image 16 and of the possible bottom layer 17. In this manner, paints of the image 16 and of the layer 17 cannot interfere with connection of the bodies 12 and 20, so that connection therof turns out to be highly reliable.

At the welding seam 22, the materials of the body 12 and of the body 20 interpenetrate by fusion and they make a kind of seal encircling the printing zone 14, so that the image 14 is enclosed in a chamber without any air that is sealingly closed with respect to the outer environment, in order to avoid any possible attack by atmospheric agents.

The welding seam 22 obtained by using laser welding technique consists of a track having a width in the range from 1 to 4 mm, and a thickness that may vary from 0.1 to 0.4 mm, depending on parameters of the process and on the shape of the member 10.

Since the the body 12 is transparent, laser welding of the bodies 12 and 20 is preferably carried out by using a laser welding head arranged on the side of the front face 12b of the body 12, which laser head emits a laser beam focused at the peripheral surface of contact of the edges of the bodies 12 and 20.

Conveniently, the decorative member 10 obtained in this manner, undergoes a thermal stress relieving process in a furnace, for example for a time of about 6 hours at 70°C. In this manner, it will be able to stand wide thermal excursions, usually in the range from -30°C to +90°C, without suffering any appreciable deformation and therefore without deteriorations of the image 14.

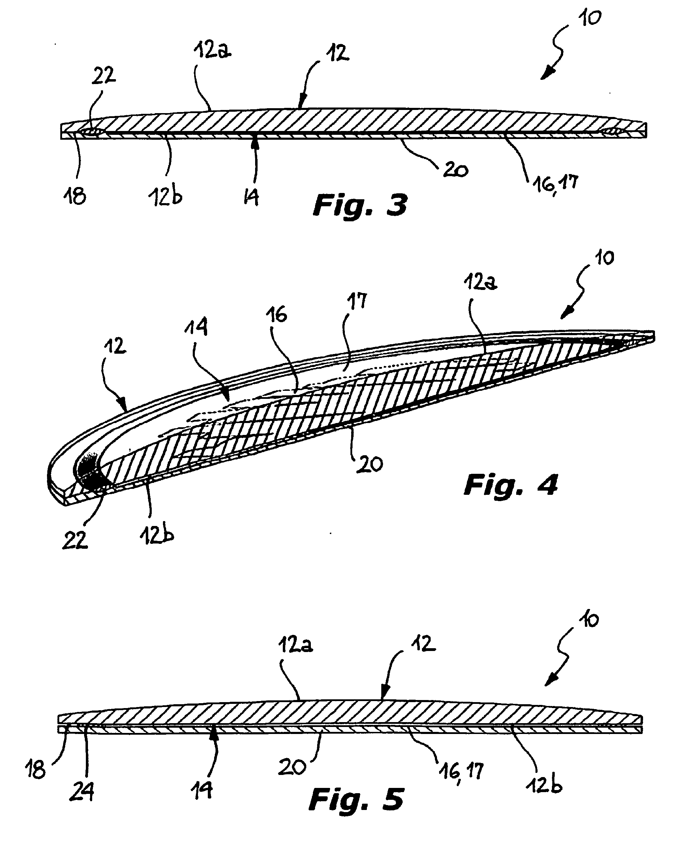

A modification of the invention is schematically shown in figure 5, wherein the same numeral references of the previous modification have been used to indicate parts equal or similar to it. Constructive details of the bodies 12 and 20, and about realization of the image 16 as well as of the possible bottom layer 17, are the same of the previous modification, and therefore they will not be described again.

In this case, connection of the bodies 12 and 20 is obtained by means of glueing, as a result of the application of a strip 24 of adhesive material on the rear face 12b of the body 12, on the outside of the zone 14 so as to encircle it, or on a corresponding portion of the front surface 20a of the body 20.

A relatively high pressure is applied to the bodies 12 and 20 arranged side by side, the amount of which is analogous to that already described with reference to the previous modification, so as to get at the same time connection of the two bodies and ejection of any air from the chamber in which the image 16 will be enclosed.

For both the modifications described, and therefore both in the case of the welding seam 18 and in the case of the adhesive strip 24, a kind of seal is made which encircles the printing zone 14 so as to sealingly isolate it with respect to the outer environment.

The member 10 obtained in this manner can be inserted in a frame (not shown), for example of chromium plated plastic material, with the aim of hiding the edge of the decorative member in which the welding seam 18 or the strip 24 of adhesive material, respectively, is present.

## Claims

1. Decorative member, particularly intended to be used as an emblem for a motor-vehicle, comprising:
- a first body (12) of transparent plastic material having a front face (12a) and a substantially flat rear face (12b),
- an image (16) formed by ink-jet printing at a printing zone (14) of the rear face (12b), and
- a generally flat second body (20) of a substantially rigid plastic material applied to the rear face (12b) of the first body (12),
**characterized in that** the size of the printing zone (14) of the first body (12) is substantially smaller than its rear face (12b), and **in that** the first body (12) and the second body (20) are connected to each other at a connecting strip (22; 24) that encircles the printing zone (14), which strip defines a tight seal, so that the image (16) is enclosed in a chamber sealingly closed with respect to the outer environment.

2. Member according to claim 1, **characterized in that** the front face (12a) of the first body (12) is convex, so that the first body (12) is lens shaped.

3. Member according to claim 1 or 2, **characterized in that** the second body (20) is an opaque body, preferably having a dark or black colour.

4. Member according to any one of claims 1 to 3, **characterized in that** a white paint layer (17) is applied on the side of the image (16) opposite to the first body (12) and within said printing zone (14).

5. Member according to any one of claims 1 to **characterized in that** said connecting strip consists of a welding seam (22).

6. Member according to any one of claims 1 to 4, **characterized in that** said connecting strip consists of a strip of adhesive material (24).

7. Method for manufacturing a decorative member, particularly intended to be used as an emblem for a motor-vehicle, comprising the steps of:
- providing a first body (12) of transparent plastic material having a front face (12a) and a substantially flat rear face (12b), as well as a second generally flat body (20) of a substantially rigid plastic material,
- forming an image (16) by means of ink-jet printing within a printing zone (14) of the rear face (12b) of the first body (12), and
- connecting the first body (12) and the second body (20) to each other, said image (16) being interposed between them,
**characterized in that** the printing zone (14) extends on an area smaller than the whole rear face (12b) of the first body (12), so that an edge (18) of the first body (12) is free from the ink of the image (16), and **in that** the step of connecting the first body (12) and the second body (20) is performed along a strip shaped zone (22; 24) extending at said free edge (1B), in order that a tight seal encircling the printing zone (14) is defined, so that the image (14) is enclosed in a chamber sealingly closed with respect to the outer environment.

8. Method according to claim 7, **characterized in that** it comprises the step of applying a white paint layer (17) on the image (16) and/or on the printing zone (14).

9. Method according to claim 8, **characterized in that** said white paint layer (17) is made by ink-jet printing.

10. Method according to claim 7 or 8, **characterized in that** connection of the first body (12) and the second body (20) includes the step of welding said bodies (12, 20) at a welding seam (18) on the outside of said printing zone (14).

11. Method according to claim 10, **characterized in that** the second body (20) is an opaque body, preferably having a dark or black colour, and **in that** said welding step is performed by a laser welding head working on the side of the front face (12a) of the first body (12).

12. Method according to any one of claims 7 to 9, **characterized in that** connection of said bodies (12, 20) comprises the step of interposing a strip of adhesive material (24) between them, on the outside of said printing zone (14).

13. Method according to claim 7 or 8, **characterized in that** the first and the second body (12, 20) arranged side by side are subjected to a high pressure, during the connection step thereof, in order to promote their connection and to eject any air from the reciprocal contact area.

14. Method according to any one of claims 7 to 13, **characterized in that** said first body (12) is formed by a moulding step, and **in that** the mould used to form the first body (12) is subjected to a sandblasting process only at the printing zone (14) of its rear face (12b), in such a manner that the surface of the printing zone (14) is slightly rough in order to improving adhesion of the ink of said image (16) and/or of said white paint layer (17).

15. Method according to any one of claims 7 to 14, **characterized in that** the plastic material used for making the first and the second body (12, 20) is subjected to a dehumidification process, and **in that** both the first and the second body (12, 20) are subjected to a dehumidification process before forming said image (16).

16. Method according to any one of claims 7 to 15, **characterized in that** a UV ray screening agent is incorporated in the plastic material used for making the first body (12), in order that said screening agent carries out a protective action for the ink of said image (16) with respect to solar radiation.

17. Method according to any one of claims 7 to 16, **characterized in that** the rear surface (12b) of the first body (12) as well as the surface of the body (20) intended to be arranged in contact with the first body (12), undergo a cleaning process by means of corona, cold plasma or liquid CO₂.

18. Method according to any one of claims 7 to 17, **characterized in that** the whole decorative member (10) is subjected to a thermal stress relieving process.

## Patentansprüche

1. Schmuckelement, insbesondere für die Verwendung als Emblem an einem Kraftfahrzeug, umfassend:
- einen ersten Körper (12) aus transparentem Kunststoff mit einer Vorderseite (12a) und einer im Wesentlichen flachen Rückseite (12b),
- ein durch Tintenstrahldruck auf die Rückseite (12b) des ersten Körpers (12) in einem Druckbereich (14) aufgebrachtes Bild (16),
- einen im Allgemeinen flachen, zweiten Körper (20), der aus einem im Wesentlichen steifen Kunststoff besteht und an der Rückseite (12b) des ersten Körpers (12) angebracht ist,
**dadurch gekennzeichnet, dass** die Größe des Druckbereiches (14) auf dem ersten Körper (12) im Wesentlichen kleinere Abmessungen als die Rückseite (12b) hat und dass der erste Körper (12) und der zweite Körper (20) über einen Verbindungsstreifen (22) aneinander befestigt sind, der den Druckbereich (14) umschließt und eine Dichtung bildet, durch die das Bild (16) in einer nach außen dicht abgeschlossenen Kammer eingeschlossen ist.

2. Schmuckelement nach Anspruch 1, **dadurch gekennzeichnet, dass** die Vorderseite (12a) des ersten Körpers (12) konvex ist, wodurch dieser linsenförmig ausgebildet ist.

3. Schmuckelement nach Anspruch 1 oder 2, **dadurch gekennzeichnet, dass** der zweite Körper (20) undurchsichtig ist und vorzugsweise eine dunkle oder schwarze Farbe hat.

4. Schmuckelement nach einem der Ansprüche 1 bis 3, **dadurch gekennzeichnet, dass** eine weiße Lackschicht (17) im Druckbereich (14) auf die Seite des Bildes (16) aufgebracht ist, die von dem ersten Körper (12) abgewandt ist.

5. Schmuckelement nach einem der Ansprüche 1 bis 4, **dadurch gekennzeichnet, dass** der Verbindungsstreifen aus einer Schweißnaht (22) besteht.

6. Schmuckelement nach einem der Ansprüche 1 bis 4, **dadurch gekennzeichnet, dass** der Verbindungsstreifen aus einem Kleber (24) besteht.

7. Verfahren zur Herstellung eines Schmuckelementes, insbesondere für die Verwendung als Emblem an einem Kraftfahrzeug, mit den den folgenden Schritten:
- Bereitstellen eines ersten Körpers (12) aus durchsichtigem Kunststoff mit einer Vorderseite (12a) und einer im Wesentlichen flachen Rückseite (12b) sowie einen im Allgemeinen flachen, zweiten Körper (20) aus einem im Wesentlichen steifen Kunststoff,
- Aufbringen eines Bildes (16) mittels Tintenstrahldruck innerhalb eines Druckbereiches (14) auf die Rückseite (12b) des ersten Körpers (12),
- Verbinden des ersten Körpers (12) mit den zweiten Körper (20), wobei zwischen beiden das Bild (16) eingeschlossen ist, **dadurch gekennzeichnet, dass** sich der Druckbereich (14) über eine Fläche erstreckt, die kleiner als die ganze Rückseite (12b) des ersten Körpers (12) ist, so dass ein Rand (18) des ersten Körpers (12) nicht durch das aufgedruckte Bild (16) bedeckt ist, und dass die Verbindung des ersten Körpers (12) mit dem zweiten Körper (20) über eine streifenförmige Zone (22; 24) erfolgt, die sich über den freien Rand (16) erstreckt, wodurch der Druckbereich (14) von einer Dichtung umschlossen wird und dadurch das Bild (16) in einer nach außen dicht abgeschlossenen Kammer liegt.

8. Verfahren nach Anspruch 7, **dadurch gekennzeichnet, dass** eine Schicht weißen Lacks (17) auf das Bild (16) und/oder den Druckbereich (14) aufgebracht wird.

9. Verfahren nach Anspruch 8, **dadurch gekennzeichnet, dass** die weiße Lackschicht (17) durch Tintenstrahldruck aufgebracht wird.

10. Verfahren nach Anspruch 7 oder 8, **dadurch gekennzeichnet, dass** die Verbindung des ersten Körpers (12) mit dem zweiten Körper (20) durch Verschweißen der beiden Körper (12, 20) über eine Schweißnaht (18) außerhalb des Druckbereichs (14) erfolgt.

11. Verfahren nach Anspruch 10, **dadurch gekennzeichnet, dass** der zweite Körper (20) aus einem undurchsichtigen, vorzugsweise dunkel oder schwarz gefärbten Körper besteht und dass die Verschweißung mittels eines Laserschweißkopfes erfolgt, der auf der Vorderseite (12a) des ersten Körpers (12) eingesetzt ist.

12. Verfahren nach einem der Ansprüche 7 bis 9, **dadurch gekennzeichnet, dass** zur Verbindung der beiden Körper (12, 20) zwischen beide ein Streifen eines Klebstoffes (24) außerhalb des Druckbereiches (14) eingebracht wird.

13. Verfahren nach Anspruch 7 oder 8, **dadurch gekennzeichnet, dass** der erste Körper (12) und der zweite Körper (20) in der Verbindungsphase unter hohem Druck aneinander gepresst werden, um ihre Verbindung zu begünstigen und Luft aus dem gemeinsamen Kontaktbereich auszupressen.

14. Verfahren nach einem der Ansprüche 7 bis 13, **dadurch gekennzeichnet, dass** der erste Körper (12) in einem Press- oder Prägeschritt hergestellt wird und dass die hierfür verwendete Form nur in dem Druckbereich (14) auf der Rückseite (12b) einem Sandstrahlverfahren unterzogen wird, so dass der Druckbereich (14) eine leicht aufgerauhte Fläche hat, um das Anhaften der Druckfarbe für das Bild (16) und/oder der weißen Lackschicht (17) zu verbessern.

15. Verfahren nach einem der Ansprüche 7 bis 14, **dadurch gekennzeichnet, dass** der für den ersten und den zweiten Körper (12, 20) verwendete Kunststoff einem Entfeuchtungsprozess unterworfen wird und dass sowohl der erste als auch der zweite Körper (12, 20) vor der Herstellung des Bildes (16) einem Entfeuchtungsprozess unterzogen werden.

16. Verfahren nach einem der Ansprüche 7 bis 15, **dadurch gekennzeichnet, dass** in den für den ersten Körper (12) verwendeten Kunststoff ein Mittel zur UV-Strahlenfilterung eingeschlossen wird, um eine Schutzfunktion für die Druckfarbe des Bildes (16) gegen Solarstrahlung herbeizuführen.

17. Verfahren nach einem der Ansprüche 7 bis 16, **dadurch gekennzeichnet, dass** die Rückseite (12b) des ersten Körpers (12) und die Oberfläche des Körpers (20), die in Berührung mit dem ersten Körper (12) kommt, einer Reinigung mittels Koronawirkung, Kaltplasma oder flüssigem CO₂ unterzogen wird.

18. Verfahren nach einem der Ansprüche 7 bis 17, **dadurch gekennzeichnet, dass** das gesamte Schmuckelement (10) einen thermischen Entspannungsprozess unterworfen wird.

## Revendications

1. Élément décoratif, en particulier destiné à être utilisé comme un emblème pour un véhicule à moteur, comprenant :
- un premier corps (12) en une matière plastique transparent ayant une face avant (12a) et une face arrière sensiblement plate (12b),
- une image (16) formée par impression à jet d'encre dans une zone d'impression (14) de la face arrière (12b), et
- un deuxième corps généralement plat (20) en une matière plastique sensiblement rigide appliquée sur la face arrière (12b) du premier corps (12)**caractérisé en ce que** la dimension de la zone d'impression (14) du premier corps (12) est sensiblement plus petite que sa face arrière (12b), et **en ce que** le premier corps (12) et le deuxième corps (20) sont reliés l'un à l'autre par une bande de liaison (22, 24) qui entoure la zone d'impression (14), laquelle bande forme une étanchéité, de telle sorte que l'image (16) est enfermée dans une chambre fermée de façon étanche par rapport à l'environnement externe.

2. Élément selon la revendication 1, **caractérisé en ce que** la face avant (12a) du premier corps (12) est convexe, de sorte que le premier corps (12) est en forme de lentille.

3. Élément selon la revendication 1 ou la revendication 2, **caractérisé en ce que** le deuxième corps (20) est un corps opaque, de préférence ayant une couleur sombre ou noire.

4. Élément selon l'une quelconque des revendications 1 à 3, **caractérisé en ce qu'**une couche de peinture blanche (17) est appliquée sur le côté de l'image (16) situé à l'opposée du premier corps (12) et à l'intérieur de ladite zone de l'impression (14).

5. Élément selon l'une quelconque des revendications 1 à 4, **caractérisé en ce que** ladite bande de raccordement est constituée par une ligne de soudure (22).

6. Élément selon l'une quelconque des revendications 1 à 4, **caractérisé en ce que** ladite bande de raccordement est constituée par une bande de matériau adhésif (24).

7. Procédé de fabrication d'un élément décoratif, en particulier destiné à être utilisé comme un emblème pour un véhicule à moteur, comprenant les étapes consistant à :
- fabriquer un premier corps (12) en une matière plastique transparente ayant une face avant (12a) et une face arrière sensiblement plate (12b), ainsi qu'un deuxième corps (20) généralement plat en une matière sensiblement rigide,
- former une image (16) au moyen d'une impression à jet d'encre dans une zone d'impression (14) de la face arrière (12b) du premier corps (12), et,
- relier le premier corps (12) et le deuxième corps (20) l'un à l'autre, ladite image (16) étant interposée entre eux,
**caractérisé en ce que** la zone d'impression (14) s'étend sur une zone plus petite que l'ensemble de la face arrière (12b) du premier corps (12), de sorte qu'un bord (18) du premier corps (12) est dépourvu de l'encre de l'image (16), et **en ce que** l'étape de connexion du premier corps (12) et du deuxième corps (20) est réalisée le long d'une zone en forme de bande (22 ; 24) s'étendant au niveau dudit bord libre (18), afin qu'un joint étanche entourant la zone d'impression (14) soit défini, de telle sorte que l'image (14) soit enfermée dans une chambre fermée de façon étanche par rapport à l'environnement externe.

8. Procédé selon la revendication 7, **caractérisé en ce qu'**il comprend l'étape consistant à appliquer une couche de peinture blanche (17) sur l'image (16) et/ou sur la zone d'impression (14).

9. Procédé selon la revendication 8, **caractérisé en ce que** ladite couche de peinture blanche (17) est réalisée par impression à jet d'encre.

10. Procédé selon la revendication 7 ou la revendication 8, **caractérisé en ce que** le raccordement du premier corps (12) et du deuxième corps (20) comprend l'étape consistant à souder lesdits corps (12, 20) selon une ligne de soudure (18) sur l'extérieur de ladite zone d'impression (14).

11. Procédé selon la revendication 10, **caractérisé en ce que** le deuxième corps (20) est un corps opaque, de préférence ayant une couleur sombre ou noire, et **en ce que** ladite étape de soudage est effectuée par une tête de soudage laser travaillant sur le côté de la face avant (12a) du premier corps (12).

12. Procédé selon l'une quelconque des revendications 7 à 9, **caractérisé en ce que** la connexion desdits corps (12, 20) comprend l'étape consistant à interposer une bande de matériau adhésif (24) entre eux, à l'extérieur de ladite zone d'impression (14).

13. Procédé selon la revendication 7 ou la revendication 8, **caractérisé en ce que** le premier et le deuxième corps (12, 20) disposés côte à côte sont soumis à une pression élevée, lors de l'étape de connexion de celui-ci, afin de favoriser leur connexion et pour éjecter l'air de la zone de contact mutuelle.

14. Procédé selon l'une quelconque des revendications 7 à 13, **caractérisé en ce que** ledit premier corps (12) est formé par une étape de moulage, et **en ce que** le moule utilisé pour former le premier corps (12) est soumis à un processus de sablage uniquement au niveau de la zone d'impression (14) de sa face arrière (12b), de telle manière que la surface de la zone d'impression (14) est légèrement rugueuse afin d'améliorer l'adhérence de l'encre de ladite image (16) et/ou de ladite couche de peinture blanche (17).

15. Procédé selon l'une quelconque des revendications 7 à 14, **caractérisé en ce que** la matière plastique utilisée pour la fabrication du premier et du deuxième corps (12, 20) est soumise à un processus de déshumidification, et **en ce que** le premier et le deuxième corps (12, 20) sont soumis à un processus de déshumidification avant la formation de ladite image (16).

16. Procédé selon l'une quelconque des revendications 7 à 15, **caractérisé en ce que** un agent de filtrage de rayons UV est incorporé dans la matière plastique utilisée pour la fabrication du premier corps (12), afin que ledit agent de filtrage ait une action de protection pour l'encre de ladite l'image (16) par rapport au rayonnement solaire.

17. Procédé selon l'une quelconque des revendications 7 à 16, **caractérisé en ce que** la surface arrière (12b) du premier corps (12) de même que la surface du corps (20) destinée à être en contact avec le premier corps (12), sont soumises à un processus de nettoyage au moyen d'effet corona, de plasma froid ou de CO₂ liquide.

18. Procédé selon l'une quelconque des revendications 7 à 17, **caractérisé en ce que** l'ensemble de l'élément décoratif (10) est soumis à un processus thermique de libération de contraintes.
